# EUROPEAN PATENT APPLICATION

(11) **EP 3 101 195 A1**
(43) Date of publication of application: **07.12.2016**
(21) Application number: 16172347.3
(22) Date of filing: 01.06.2016
(51) Int. Cl.: E04D 13/03, B32B 17/10, E06B 3/66

(54) **ROOFLIGHT WITH GLAZED UNIT**

(30) Priority: 01.06.2015 PL 12413015 U
(71) Applicant: FAKRO PP Sp. z o.o., 33-300 Nowy Sacz (PL)
(72) Inventor: MAJOCH, Mateusz, 33-300 Nowy Sacz (PL)

(57) **Abstract**

The subject of the proposed solution is a rooflight with a glazed unit and a termination bar, wherein the glazed unit has an outer laminated pane, comprising at least two glass layers, including the outer layer and the inner layer, and at least one flexible layer which essentially forms an interlayer between the glass layers, and at least one of the laminated pane layers (11), which is not the inner layer (112), has a reduced length relative to the inner layer (112), which creates a cut-out to embed the arm of the termination bar

## Description

The subject of the present application is a rooflight with a glazed unit made up of an outer glass pane and an inner glass pane, separated with a spacer bar. The outer laminated pane comprises at least two glass layers and one flexible layer, which is essentially an interlayer between the outer layer and the inner layer. The number of panes is often increased in order to improve thermal performance. In such cases the glass unit includes another or more intermediate glass pane(s) separated with spacer bars.

For rooflights with the outer glass pane in direct contact with the atmosphere, parameters which determine quality of thermal protection are essential. However, strength and burglar-proof features are equally important in many applications.

Burglar-proof features of glass panes are essential if rooflights are used as structures which separate the interior of a building from its external unsecured surroundings. Strength properties of rooflights mounted on flat roofs or in glass floors, with anticipated static or dynamic loads generated by e.g. passing people or due to other loads caused by human activity, are essential as well.

The rooflight which complies with the criteria of increased strength is usually equipped with a flat glazed unit made up of several glass panes, which are separated by empty space filled with a gas of low thermal conductivity, for instance argon or krypton. In terms of mechanics, the outer glass pane is the most important one as it is exposed to static and dynamic loads. The outer glass pane, which complies with the requirements relating to resistance to the mentioned loads, can comprise one layer with increased thickness or several laminated layers, using transparent polymer foil as the interlayer. The laminated pane system considerably improves flexibility and resistance of the entire glazed unit to mechanical loads. In addition, it prevents formation of dangerous pieces when the pane of the glass unit is shattered.

A major problem is presented by proper and efficient anchoring of the glass pane within the building structure. The most frequently applied methods include mechanical spot anchoring, mechanical linear attachment and adhesive attachment.

The main problem for mechanical spot anchoring is glass breaking as a result of too high mechanical loads within the contact area of the glass pane with the anchoring element. This fixing method often requires openings in the glass pane, which may result in micro-cracks causing cracks once higher load is applied. A better solution in mechanical terms is to use linear attachment, usually on the edge of the glass pane, wherein the load is distributed over a larger pane area.

Adhesive attachment, preferably along the edge, is much more advantageous in terms of uniformity of mechanical loads which are distributed over the entire width of the adhesive layer. In addition, flexible adhesives can be applied which compensate for mutual movements of the glass pane and the frame to which the same is attached.

For rooflights and floor skylights, there is a demand for a light glazing anchoring solution wherein the pane constitutes the largest possible part of the light surface, and frame elements do not project from the glass pane level. The most natural solution which complies with these requirements is adhesive attachment. However, for rooflights, there are official requirements relating to mechanical attachment, which can preferably be used together with adhesive attachment. One of the standards defining requirements for walkable glazing is e.g. German Standard DIN 18008-5; pursuant to the standard "[...] All glazing must be held in its position by means of suitable mechanical attachment [...]". An attempt to solve the mentioned problems is disclosed in Patent No. EP 0319695 B1, wherein several possible solutions with double - mechanical and adhesive - attachment of the glazed unit to the frame are provided, wherein the frame does not project from the level of the glass pane plane. Depending on the configuration, the adhesive bond is used between the frame and the inner glass pane or between the frame and both glass panes (i.e. the inner and outer glass pane). For the mechanical joint, several solutions have been proposed in the embodiments of the solution. All proposals require mechanical processing of the glass pane by milling. This process is not advantageous due to the possibility of micro-cracks caused by vibrations which occur during milling. Therefore, it is necessary to find another solution which eliminates mechanical processing of the finished glass pane.

A solution is disclosed under Patent No. EP1350899B1 as regards anchoring a multi-layer fireproof glass pane, wherein the top surface of the pane is located at the level of the top edge of the frame. The mechanical anchoring element is given as a flexible pin pressed into the lateral gap between the glass pane edge and the frame.

Also, another solution is known under Swedish Patent No. SE519551 C2, wherein one of the embodiment discloses an anchoring method associated with the supporting device for the three-layered laminated pane. The essence of the solution is to place a metal hollow profile in the recess on the perimeter of the laminated pane. The recess is created by a shorter dimension of the middle glass pane in the three-layered laminated pane. A hollow profile, which can be used to fasten the pane, is placed in the created free space prior to lamination. An advantage of the solution is that the anchoring element is hidden inside the laminated pane and no mechanical processing is required. This solution considerably reduces stresses in the glass pane and provides great possibilities of installing glass panes in any position, e.g. within exterior wall glazing. However, it is impossible to be applied directly to anchoring glass panes in rooflights or floor skylights, which require that the frame level is maintained below the outer surface of the glass pane.

Also, a solution under Patent No. EP 0528781 B1 is known of a fireproof glazed unit anchored in the frame, wherein the inner laminated pane comprises two glass panes, wherein the outer glass pane has a reduced length relative to the inner glass pane, which creates an offset. This offset is used to embed the glass pane in the glass pane cut-out, wherein the main objective of the applied solution is to create space for free expansion if the glass pane extends significantly upon temperature rise.

Anchoring of the glazed unit of improved strength and load resistance in rooflights requires that both: resistance to weather conditions is maintained, and mechanical attachment is provided.

The objective of the proposed utility model is a rooflight with a glazed unit of improved strength and load resistance, attached mechanically or by adhesive and mechanical means, provided that the condition is met that the pane anchoring elements, such as fastening bars, are maintained below the outer surface of the glass pane.

The rooflight according to the proposed utility model comprises two main elements: a flat glazed unit and a frame.

The glazed unit to be installed in the rooflight comprises at least two glass panes separated by a spacer bar and empty space filled with a gas of low thermal conductivity. Regardless of the number of additional intermediate glass panes, the glazed unit always has an outer glass pane and an inner glass pane. In terms of mechanics, the outer glass pane is the most important item, which is exposed to static and dynamic loads. Therefore, the best proposed solution is to apply laminated glass. The outer glass pane comprises at least two layers which are laminated together using transparent foil made of a flexible material to be used as an interlayer. There are various possible configurations of anchoring the glazed unit to the frame. For a plastic rooflight frame, it is a preferable solution to glue the outer glass pane to the top surface of the rooflight frame as an additional sealing function provided by such a bond is obtained. However, the above does not exclude other gluing variants, e.g. the inner pane in the glass pane cut-out or the inner pane together with the outer pane if necessary. For rooflights with a reinforced glass pane, besides gluing, a mechanical attachment method is also required, whereas technical and aesthetic requirements necessitate such a solution wherein elements of the rooflight frame and elements fastening the glazed unit are arranged below the surface of the outer glass pane. Mechanical attachment of the glazed unit is ensured by pressing the outer glass pane down using a termination bar. An additional advantage of the rooflight frame, the profile and fastening elements of which are located below the surface of the outer glass pane, is convenience and safety of use.

The essence of the proposed utility model is a solution for the rooflight with a glazed unit, wherein the outer glass pane is laminated and comprises at least two glass layers, wherein the outer layer (or, if there are more layers, at least one layer nor being the inner one), has a reduced length relative to the inner glass pane, which creates an offset. This offset forms a cut-out, preferably along the entire edge of the outer glass pane, used to embed the termination bar, preferably on the entire perimeter of the joint between the frame and the glazed unit. The height dimension of the termination bar preferably does not project beyond the level of the outer surface of the outer glass pane. Tightness of the joint of the termination bar and the outer glass pane can be obtained using a flexible gasket within the contact surface between both elements. In addition, the mounting gap between the termination bar and the outer glass pane can be filled with sealing compound once the final installation is completed.

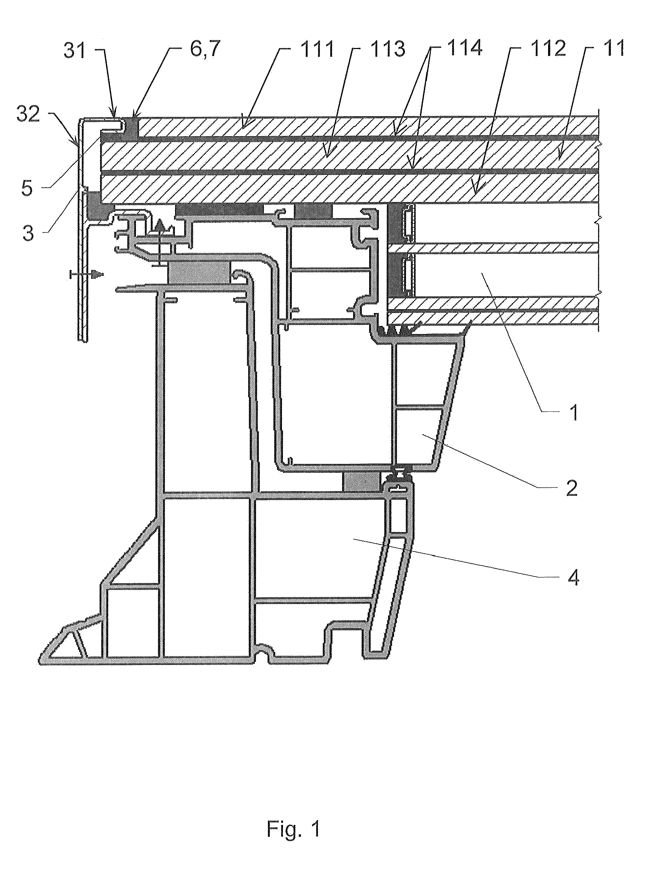

A part of the cross-section of the proposed utility model without background as in the first embodiment is shown in Fig. 1.

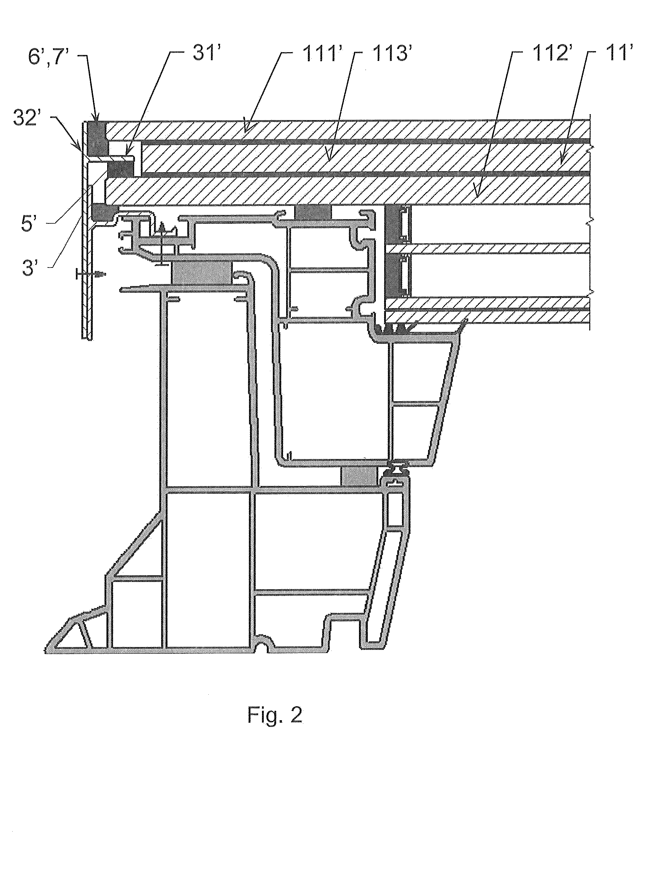

A part of the cross-section of the proposed utility model without background as in the second embodiment is shown in Fig. 2.

The rooflight according to the proposed utility model in the first embodiment comprises a glazed unit 1 embedded within a frame 2 and anchored mechanically using a termination bar 3. For the variant of the rooflight design with an openable leaf as shown in Fig. 1, the frame 2 is mounted in an openable fashion in the framing 4, which is anchored in a fixed manner within the roof structure. For a non-openable rooflight, the frame 2 and the framing 4 constitute one non-detachable element.

The glazed unit 1 has an outer laminated pane 11 comprising three glass layers: an outer layer 111 and an inner layer 112 and an intermediate layer 113, which are glued together using flexible layers 114 which create a transparent interlayer between the glass layers. The outer layer 111 has a reduced length relative to the inner layer 112 and the intermediate layer 113, which creates a cut-out to embed the anchoring arm 31 of the termination bar 3, wherein the arm constitutes a direct element of the mechanical attachment of the glazed unit 1. An additional element which improves flexibility and tightness of the joint of the anchoring arm 31 and the outer glass pane 11 is a gasket 5. The side arm 32 of the termination bar 3 is preferably attached to the frame 2, directly or using intermediate elements and fasteners, e.g. screws. The side arm is also an element which protects the closure area of the frame 3 in the framing 4 from weather conditions. The profile of the termination bar 3 preferably does not project beyond the level of the outer plane of the outer layer 111, whereas the top surface of the anchoring arm 31 is preferably located within the same plane with the outer surface of the outer layer 111. Due to non-uniform thermal expansion of rooflight components and their various temperatures, a mounting gap 6 is envisaged, which is a section of the cut-out between the anchoring arm 31 of the termination bar 3 and the edge of the outer layer 111. The mounting gap 6 is filled with flexible sealing compound 7, which protects the inside of the rooflight from leakage of rain water and other contamination.

The structure of the rooflight according to the proposed utility model in the second embodiment shown in Fig. 2 is essentially based on the rooflight described in the first embodiment. In the proposed solution under this embodiment, the interlayer 113' has a reduced length relative to the inner layer 112' and the outer layer 111', which creates a cut-out enclosed from three sides to embed the anchoring arm 31' of the termination bar 3'. An additional element which improves flexibility of the joint of the anchoring arm 31' and the outer layer 111' of the outer glass pane 11' is a gasket 5'. Due to non-uniform thermal expansion of rooflight components and their various temperatures, a mounting gap 6' is envisaged, which creates a distance between the anchoring arm 32' of the termination bar 3' and the edge of the outer layer 111'. The mounting gap 6' between the side arm 32' and the side edge of the outer layer 111' of the outer glass pane 11' is filled with flexible sealing compound 7', which protects the inside of the rooflight from leakage of rain water and other contamination.

Any and all solutions which are combinations of both embodiments are also claimed under the utility model.

## Claims

1. A rooflight with a glazed unit and a termination bar, wherein the glazed unit has an outer laminated pane, comprising at least two glass layers, including the outer layer and the inner layer, and at least one flexible layer which essentially forms an interlayer between the glass layers, **characterised in that** at least one of the laminated pane layers (11, 11'), which is not the inner layer (112, 112'), has a reduced length relative to the inner layer (112, 112'), which creates a cut-out to embed the arm of the termination bar (3, 3').

2. The rooflight according to claim 1, **characterised in that** the outer layer (111) has a reduced length relative to the inner layer (112), which creates a cut-out to embed the anchoring arm (31) of the termination bar (3).

3. The rooflight according to claim 1, **characterised in that**, in case of three or more glass layers of the laminated pane (11'), at least one of the intermediate layers (113'), which is not the inner layer (112'), has a reduced length relative to the inner layer (112'), which creates a cut-out to embed the fixing arm (31') of the termination bar (3').

4. The rooflight according to the preceding claims, **characterised in that** the termination bar (3, 3') does not project beyond the level of the outer plane of the outer layer (111, 111') surface.

5. The rooflight according to the preceding claims, **characterised in that** the mounting gap (6, 6') between the termination bar (3, 3') and the outer layer (111, 111') is filled with sealing compound (7, 7').
